# EUROPÄISCHE PATENTANMELDUNG

(11) **EP 1 231 396 A1**
(43) Veröffentlichungstag der Anmeldung: **14.08.2002**
(21) Anmeldenummer: 01103293.5
(22) Anmeldetag: 13.02.2001
(51) Int. Cl.: F16D 23/06

(54) **Schaltgetriebe mit einer Synchronisiereinrichtung**

(71) Anmelder: Ford Global Technologies, Inc., A subsidiary of Ford Motor Company, Dearborn, Michigan 48126 (US)
(72) Erfinder: Dehne, Peter, 42399 Wuppertal (DE); Najork, Jörg, 51469 Bergisch Gladbach (DE); Pitz, Jürgen, 50259 Pulheim (DE)
(74) Vertreter: Drömer, Hans-Carsten, Dipl.-Ing.

(57) **Zusammenfassung**

Die Erfindung betrifft ein Schaltgetriebe mit Synchronisiereinrichtung, wobei zur Begrenzung der axialen Verschiebebewegung der Schaltmuffe (1) zwischen mindestens zwei benachbarten Zähnen (12a, 12b; 12b, 12c) der Innenverzahnung der Schaltmuffe (1) ein Anschlag (13) ausgebildet ist, der gegen die Kupplungsverzahnung (4) des Gangrades (6) anstößt. Vorzugsweise hat der Anschlag eine zur Keilform der Außenverzahnung (2) komplementäre Form mit schrägen Anschlagflächen (14).

## Beschreibung

Die Erfindung betrifft ein Schaltgetriebe mit einer Synchronisiereinrichtung, enthaltend:
a) eine Welle mit einer Außenverzahnung,
b) eine axial verschiebebewegliche Schaltmuffe mit einer Innenverzahnung, die mit der Außenverzahnung der Welle in Eingriff steht,
c) einen auf der Welle angeordneten Synchronring mit einer Sperrverzahnung, die bei einer axialen Verschiebung der Schaltmuffe mit deren Innenverzahnung in Eingriff gebracht wird,
d) ein auf der Welle angeordnetes Gangrad mit einer Kupplungsverzahnung, die bei einer axialen Verschiebung der Schaltmuffe über den Synchronring hinaus mit der Innenverzahnung der Schaltmuffe in Eingriff gebracht wird.

Eine Synchronisiereinrichtung der genannten Art ist zum Beispiel aus der US 4 628 751 bekannt. Die Synchronisiereinrichtung dient dazu, wahlweise eine Welle und ein auf der Welle drehbar angeordnetes Gangrad drehfest miteinander zu koppeln, so dass eine Drehbewegung von der Welle auf das Gangrad oder umgekehrt übertragen werden kann. Die drehfeste Kopplung zwischen Welle und Gangrad erfolgt dabei mittels einer axialen Verschiebung der Schaltmuffe, so dass deren Innenverzahnung sowohl mit der Außenverzahnung der Welle als auch mit der Kupplungsverzahnung des Gangrades in Eingriff steht und diese beiden Elemente hierdurch drehfest koppelt.

Bei der Herstellung einer derartigen drehfesten Kopplung über die axiale Verschiebung der Schaltmuffe müssen die in der Regel unterschiedlichen Drehzahlen von Welle und Gangrad zunächst aneinander angeglichen werden, damit die Verzahnungen von Schaltmuffe und Gangrad möglichst glatt, geräuscharm und beschädigungsfrei ineinander geschoben werden können. Dieser Angleichung der Drehzahlen dient der Synchronring, welcher sich mit der Welle beziehungsweise mit der Schaltmuffe dreht, diesen gegenüber jedoch einen gewissen Rotationsspielraum hat. Bei einer axialen Verschiebung der Schaltmuffe wird der Synchronring über eine an ihm ausgebildete Reibfläche mit einer komplementären Reibfläche am Gangrad in Kontakt gebracht, so dass sich zunächst über den Synchronring eine Reibungskopplung zwischen Welle beziehungsweise Schaltmuffe einerseits und Gangrad anderseits ausbildet. Über diesen Reibkontakt kann in schonender und geräuscharmer Weise ein Drehzahlausgleich zwischen den genannten Elementen stattfinden. Während des Ausgleichens der Drehzahlen ist der Synchronring relativ zur Schaltmuffe um den ihm möglichen Winkelversatz verdreht, wodurch seine Sperrverzahnung ein weiteres axiales Vorschieben der Schaltmuffe so lange blockiert, bis sich die Drehzahlen von Schaltmuffe und Gangrad angeglichen haben.

Die axiale Verschiebung der Schaltmuffe in Richtung des Gangrades muss in der Regel begrenzt werden. Beim ersten und zweiten Gang eines Schaltgetriebes ergibt sich eine solche Begrenzung in der Regel dadurch, dass die Schaltmuffe am axialen Ende der Kupplungsverzahnung des Gangrades gegen eine kreisförmige Stirnfläche des Gangrades anstößt. Am Außenrand dieser Stirnfläche ist die Hauptverzahnung des Gangrades angeordnet, über welche das Gangrad mit weiteren Elementen des Getriebes in Eingriff steht. Für höhere Gänge wie zum Beispiel den vierten und fünften Gang steht eine solche Stirnfläche jedoch nicht zur Verfügung, da bei diesen Gängen der Durchmesser des Gangrades im Bereich der Hauptverzahnung kleiner ist als im Bereich der Kupplungsverzahnung.

In diesen Fällen ist es bekannt, die axiale Bewegung der Schaltmuffe durch eine zusätzliche Scheibe hinter dem Synchronring zu begrenzen. Eine solche Scheibe erhöht allerdings in unerwünschter Weise die axiale Baulänge des Schaltgetriebes. Ferner ist es bekannt, die axiale Verschiebebewegung der Schaltmuffe durch einen Nocken, das heißt einen erhöhten Kopfkreisdurchmesser der Zähne des Kupplungsringes, sowie durch eine Schaltmuffe mit Taschen zu begrenzen. Eine solche Erhöhung des Kopfkreisdurchmessers der Zähne des Kupplungsringes ist jedoch bei Synchronisiereinrichtungen mit kleinen Zähnen (fine pitch design) nicht möglich, da die Zahnbreite zu gering ist.

Aus der oben genannten US 4 628 751 ist ein Begrenzungsmechanismus für die axiale Verschiebung der Schaltmuffe bekannt, bei welcher ein Teil der Zähne der Schaltmuffe an eine durchgezogene Anschlagsfläche des Gangrades anstößt. Die Zähne der Schaltmuffe sind dabei in zwei Arten von Zähnen eingeteilt, nämlich axial kürzere Zähne, die nur mit der Sperrverzahnung des Synchronringes zusammenwirken, sowie axial längere Zähne, die die eigentliche Kopplung mit der Kupplungsverzahnung des Gangrades herstellen. Da die axial kürzeren Zähne nicht mit der Kuplungsverzahnung des Gangrades in Eingriff gebracht werden müssen, können sie wie erwähnt an einer Stirnfläche des Gangrades anstoßen und hierdurch die Begrenzungsfunktion ausüben. Nachteilig bei einem derartigen Schaltgetriebe ist allerdings der komplizierte Aufbau, der Veränderungen sowohl an der Schaltmuffe als auch am Synchronring und am Gangrad erforderlich macht. Weiterhin ist nachteilig, dass einerseits für die Kopplung zwischen Schaltmuffe und Synchronring und andererseits für die Kopplung zwischen Schaltmuffe und Gangrad weniger Zähne zur Verfügung stehen als die volle Zahl der Zähne der Schaltmuffe.

Vor diesem Hintergrund war es Aufgabe der vorliegenden Erfindung, ein Schaltgetriebe bereitzustellen, welches mit verringertem konstruktiven Aufwand eine Begrenzung der axialen Verschiebebewegung der Schaltmuffe insbesondere bei Getrieben mit engem Zahnabstand ermöglicht.

Diese Aufgabe wird durch ein Schaltgetriebe mit den in Anspruch 1 angegebenen Merkmalen gelöst. Vorteilhafte Ausgestaltungen sind in den Unteransprüchen enthalten.

Das Schaltgetriebe enthält demnach folgende Elemente:
a) Eine Welle mit einer Außenverzahnung. Im Allgemeinen ist diese Außenverzahnung nicht unmittelbar an der Welle angebracht, sondern die Welle hat eine primäre Außenverzahnung mit kleinerem Radius, auf welcher ein Synchronkörper mit einer komplementären Innenverzahnung sitzt. Der Synchronkörper weist dann die genannte (sekundäre) Außenverzahnung "der Welle" an seinem äußeren Umfang auf. Im Rahmen der vorliegenden Erfindung spielt der erläuterte detaillierte konstruktive Aufbau jedoch keine Rolle.
b) Eine axial verschiebebewegliche Schaltmuffe mit einer Innenverzahnung, die mit der Außenverzahnung der Welle in Eingriff steht. Die Angabe "axial" bezieht sich dabei auf die Achse der Welle, zu der die Schaltmuffe konzentrisch angeordnet ist. Über den Eingriff der Innenverzahnung der Schaltmuffe mit der Außenverzahnung der Welle wird eine drehfeste Kopplung zwischen Schaltmuffe und Welle hergestellt.
c) Einen auf der Welle konzentrisch angeordneten Synchronring mit einer äußeren Sperrverzahnung, die bei einer axialen Verschiebung der Schaltmuffe mit der Innenverzahnung der Schaltmuffe in Eingriff gebracht wird. In der Regel ist der Synchronring relativ zur Schaltmuffe um einen begrenzten Rotationswinkel verdrehbar. Dadurch kann sich seine Sperrverzahnung den Zähnen der Innenverzahnung der Schaltmuffe in den Weg stellen, um eine axiale Verschiebung der Schaltmuffe aufzuhalten, wenn die Drehzahlen von Schaltmuffe und Gangrad noch nicht angeglichen sind. Weiterhin weist der Synchronring in der Regel mindestens eine Reibfläche auf, welche mit einer komplementären Reibfläche am Gangrad eine Reibungskopplung herstellen kann.
d) Ein konzentrisch auf der Welle angeordnetes Gangrad mit einer Kupplungsverzahnung, die bei einer axialen Verschiebung der Schaltmuffe über den Synchronring hinaus mit der Innenverzahnung der Schaltmuffe in Eingriff gebracht wird. Das Gangrad weist darüber hinaus im Allgemeinen eine Hauptverzahnung auf, über welche es mit anderen Elementen des Getriebes zur Übertragung der Rotation gekoppelt ist.

Um ein glattes Ineinandergreifen der Verzahnungen von Schaltmuffe, Synchronring und Gangrad zu erlauben, sind die zugehörigen Zähne in der Regel mit einer Keilform ausgebildet, das heißt, dass sie an ihren axialen Enden spitz zulaufen.

Das erfindungsgemäße Schaltgetriebe ist dadurch gekennzeichnet, dass zwischen mindestens zwei aufeinanderfolgenden Zähnen der Innenverzahnung der Schaltmuffe jeweils ein Anschlag angeordnet ist, der gegen die Kupplungsverzahnung des Kupplungsringes anschlägt, um die axiale Verschiebung der Schaltmuffe zu begrenzen. Im Anschlagbereich sind die Sperrzähne des Synchronringes entfernt.

Bei dem Schaltgetriebe ist somit die axiale Verschiebung der Schaltmuffe in konstruktiv verhältnismäßig einfacher Weise begrenzt. Vorteilhaft gegenüber anderen bekannten Konstruktionen ist auch, dass sich die axiale Baulänge des Getriebes verkürzt und dass grundsätzlich alle Zähne der Schaltmuffe bei der Wechselwirkung mit dem Synchronring und dem Gangrad beteiligt bleiben können. Ein weiterer Vorteil besteht darin, dass die Bereitstellung eines Anschlages insbesondere auch bei Kupplungsverzahnungen mit sehr kleinen Zahnbreiten möglich ist.

Gemäß einer bevorzugten Ausgestaltung der Erfindung sind mehrere Gruppen von Zähnen, zwischen denen Anschläge angeordnet sind, vorhanden und äquidistant über den Umfang der Schaltmuffe verteilt. Insbesondere können drei Gruppen zu vorzugsweise je drei Zähnen vorhanden sein, wobei diese drei Gruppen unter einem Winkelabstand von 120° zueinander über den Umfang der Schaltmuffe verteilt sind.

Wie bereits oben erläutert wurde, haben die Kupplungszähne des Kupplungsringes in der Regel eine Keilform, um das Zusammenschieben mit den Innenzähnen der Schaltmuffe zu erleichtern. Vorzugsweise ist dabei der Anschlag, der zwischen zwei Zähnen der Innenverzahnung der Schaltmuffe ausgebildet ist, komplementär zur genannten Keilform der Kupplungszähne. Hierdurch wird gewährleistet, dass die Kupplungszähne des Kupplungsringes nicht allein mit ihrer Spitze gegen einen Anschlag stoßen, sondern sich über eine Fläche an den Anschlag legen.

Bei einer weiteren Ausgestaltung der Erfindung fehlen innerhalb einer Gruppe von Zähnen, zwischen denen Anschläge ausgebildet sind, Zähne aus der regulären Zahnreihe der Schaltmuffe. Die ausgelassenen Zähne werden dabei durch den erfindungsgemäßen vorgesehenen Anschlag überbrückt.

Gemäß einer Weiterbildung der Erfindung wird der Anschlag zwischen benachbarten Zähnen der Schaltmuffe durch ein Einsatzelement gebildet, welches zwischen den benachbarten Zähnen befestigt ist. Ein solches separates Einsatzelement erlaubt eine einfachere Herstellung des Schaltgetriebes, wobei durch die Auswahl eines passenden Einsatzelementes eine Anpassung an verschiedene gewünschte axiale Bewegungswege möglich ist.

Bei der zuletzt genannten Ausführungsform ist das Einsatzelement vorteilhafterweise in mindestens einer, vorzugsweise in zwei Nuten verankert, welche an der Schaltmuffe entlang laufen.

Im Folgenden wird die Erfindung mit Hilfe der Figuren beispielhaft erläutert. Es zeigt:
- Fig. 1: schematisch den Aufbau einer Synchronisiereinrichtung;
- Fig. 2: einen Schnitt entlang der Linie II-II von Figur 1 mit einer Abrollung eines Teiles von einer ersten Ausführungsform der Schaltmuffe;
- Fig. 3: einen Schnitt entsprechend Figur 2 bei einer zweiten Ausführungsform der Schaltmuffe;
- Fig. 4: einen Schnitt entsprechend Figur 2 bei einer dritten Ausführungsform der Schaltmuffe.

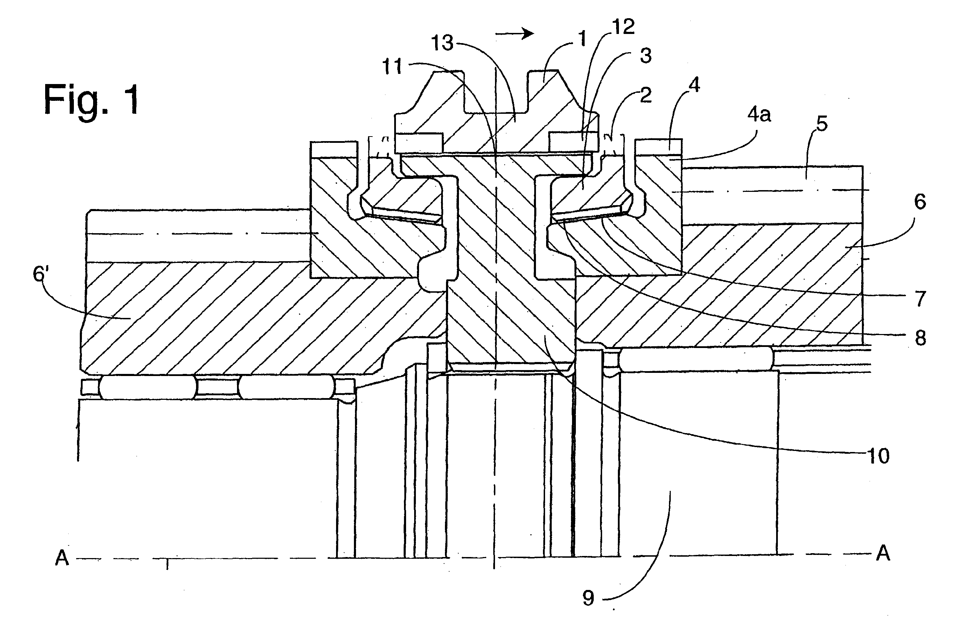

In Figur 1 sind die Elemente einer Synchronisiereinrichtung schematisch dargestellt, welche im Rahmen der vorliegenden Erfindung relevant sind. Die Figur zeigt im Querschnitt entlang der Längsachse die obere Hälfte einer Welle 9 mit einer Wellenachse A. Auf der Welle ist ein Synchronkörper 10 (Nabe) drehfest angeordnet, welcher zum Beispiel über eine entsprechende Verzahnung mit der Welle 9 gekoppelt sein kann. Der Synchronkörper 10 trägt eine Außenverzahnung 11, welche mit der Innenverzahnung 12 einer hülsenförmigen Schaltmuffe 1 in Eingriff steht.

Des weiteren ist auf der Welle 9 drehbar ein Gangrad 6 angeordnet, welches eine Hauptverzahnung 5 aufweist, die mit anderen Elementen des Getriebes (nicht dargestellt) in Eingriff steht. Mit dem Schaltgetriebe kann eine drehfeste Kopplung zwischen der Welle 9 und dem Gangrad 6 hergestellt werden, wenn dies für das Einlegen eines bestimmten Übersetzungsverhältnisses (Ganges) erforderlich ist. Die drehfeste Kopplung erfolgt dabei über die Schaltmuffe 1, welche axial verschiebebeweglich ist (s. Pfeil). Durch eine axiale Verschiebung der Schaltmuffe 1 in Richtung des Gangrades 6 (in Figur 1 nach rechts) kann die Innenverzahnung 12 der Schaltmuffe mit der Kupplungsverzahnung 4 des Kupplungskörpers 4a, welcher drehfest mit dem Gangrad 6 verbunden ist, in Eingriff gebracht werden. Dadurch wird die gewünschte drehfeste Kopplung zwischen Gangrad 6 und Welle 9 hergestellt, da die Schaltmuffe über die Außenverzahnung 11 des Synchronkörpers 10 und die Innenverzahnung 12 der Schaltmuffe 1 während der gesamten Verschiebung drehfest mit der Welle gekoppelt bleibt. Durch eine axiale Verschiebebewegung der Schaltmuffe in Fig. 1 nach links kann in analoger Weise eine Kopplung mit einem zweiten Gangrad 6' hergestellt werden, worauf nachfolgend nicht näher eingegangen wird.

Um die anfänglich in der Regel unterschiedlichen Drehzahlen von Gangrad 6 und Welle 9 vor dem Ineinandergreifen der Innenverzahnung 12 der Schaltmuffe 1 und der Kupplungsverzahnung 4 des Gangrades 6 aneinander anzugleichen, ist in bekannter Weise ein Synchronring 3 zwischen Schaltmuffe 1 und Gangrad 6 vorgesehen. Dieser hat eine Außenverzahnung 2, die mit der Innenverzahnung 12 der Schaltmuffe 1 in Eingriff gebracht werden kann. Weiterhin hat der Synchronring 3 eine Reibfläche 8, die mit einer komplementären Reibfläche 7 am Gangrad 6 zusammenwirkt, um beim Schaltvorgang einen Ausgleich der Drehzahlunterschiede herbeizuführen.

Wie aus Figur 1 erkennbar ist, hat - zumindest bei höheren Gängen wie dem vierten und fünften Gang - die Hauptverzahnung 5 des Gangrades 6 einen kleineren Durchmesser als die Kupplungsverzahnung 4. Die axiale Verschiebebewegung der Schaltmuffe 1 wird somit durch die Hauptverzahnung beziehungsweise die zugehörige Stirnfläche des Gangrades 6 nicht begrenzt. Um dennoch in konstruktiv einfacher und auch bei Schaltgetrieben mit kleinen Zahnabständen durchführbarer Weise eine Begrenzung der axialen Verschiebebewegung der Schaltmuffe 1 zu erzielen, ist erfindungsgemäß mindestens ein Anschlag 13 zwischen zwei benachbarten Zähnen 12 der Schaltmuffe 1 vorgesehen. Dieser Anschlag 13 stößt an die Kupplungsverzahnung 4 des Gangrades 6 an, wenn die Schaltmuffe 1 entsprechend weit axial (in Figur 1 nach rechts) verschoben wird. Eine weitere axiale Verschiebung der Schaltmuffe 1 wird dadurch verhindert.

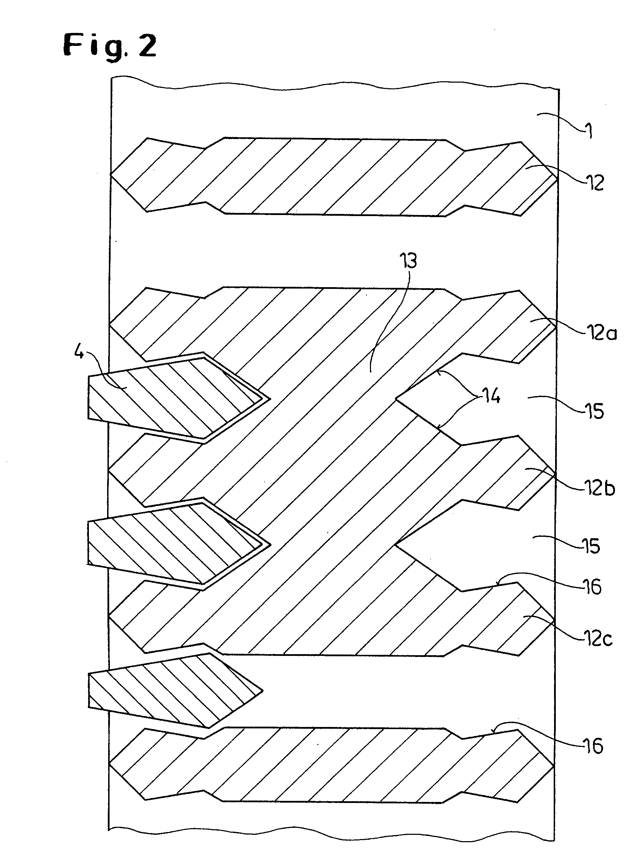

In den Figuren 2, 3 und 4 sind drei verschiedene Ausführungsformen für die Ausbildung des Anschlags 13 an der Innenverzahnung der Schaltmuffe 1 dargestellt. Die Darstellungen sind dabei in Form einer teilweisen Abwicklung der Innenverzahnung der Schaltmuffe in einer Schnittebene entsprechend der Linie II-II von Figur 1 dargestellt.

Bei der ersten, in Figur 2 dargestellten Ausführungsform weist die Schaltmuffe 1 eine Gruppe von drei Zähnen 12a, 12b und 12c auf, bei denen der Zwischenraum zwischen zwei Zähnen im axial mittleren Bereich nicht durchgehend offen ist, sondern durch den Anschlag 13 verschlossen wird. Im linken Teil der Figur sind exemplarisch die Kupplungszähne 4 eines Gangrades dargestellt, die gegen den Anschlag 13 anstoßen und somit eine weitere axiale Verschiebung der Schaltmuffe 1 nach links verhindern. Dabei ist ferner erkennbar, dass die den Zähnen 4 zugewandte Seite des Anschlages 13 mit zwei schräg verlaufenden Anschlagflächen 14 ausgebildet ist, so dass eine zur Keilform der Zähne 4 des Kupplungsringes 6 komplementäre Form ausgebildet wird. Die drei Zähne 12a, 12b und 12c der Schaltmuffe 1 bilden somit zwischen sich zwei Taschen 15 aus, in die entsprechende Kupplungszähne 4 des Gangrades einlaufen können.

Der axial äußere Teil der Zähne 12a, 12b und 12c ist in gleicher Weise ausgebildet wie bei allen anderen Zähnen der Schaltmuffe, das heißt, dass er insbesondere deren Keilform mit einem Hinterschneidungswinkel 16 aufweist. Die Herstellung einer solchen Schaltmuffe 1 kann daher ähnlich wie bei einer herkömmlichen Schaltmuffe durch Rollen geschehen, wobei lediglich die durchgehenden Lücken zwischen den Zähnen 12a, 12b und 12c nicht hergestellt werden.

Die drei Zähne 12a, 12b und 12c, zwischen denen jeweils ein Anschlag 13 ausgebildet ist, bilden eine Gruppe, wobei vorzugsweise drei derart ausgebildete Gruppen in einem Winkelabstand von 120° über den Umfang der Schaltmuffe 1 verteilt sind.

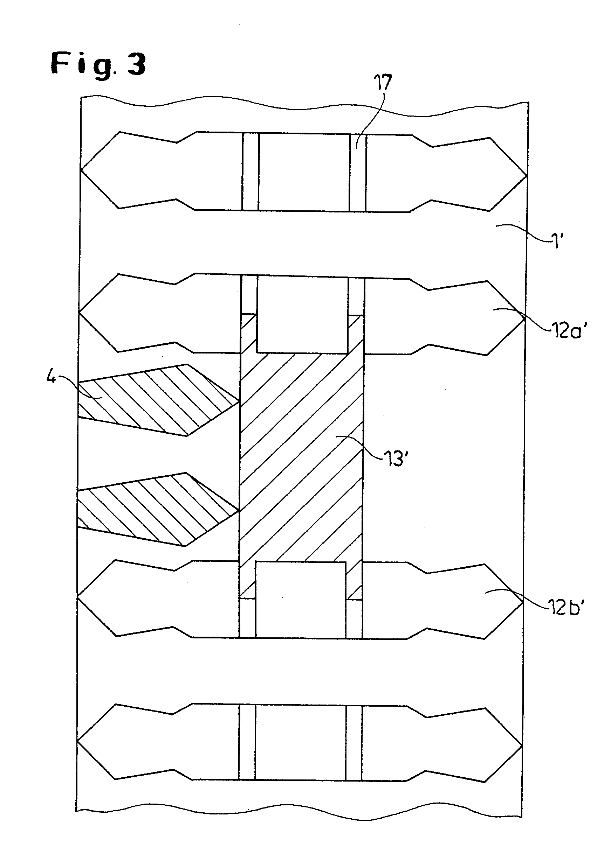

Figur 3 zeigt eine alternative Ausgestaltungsform der Schaltmuffe 1'. In der Schaltmuffe 1' sind dabei im Bereich der Innenverzahnung zwei kreisförmig umlaufende Rillen 17 vorgesehen. In diese Rillen kann ein Einsatz 13' eingesetzt werden, welcher als Anschlag den Durchgang zwischen den benachbarten Zähnen 12a' und 12b' begrenzt. Wie in Figur 3 erkennbar ist, stoßen die Kupplungszähne 4 des Gangrades mit ihren Spitzen gegen die Seitenfläche dieses Einsatzes 13' und begrenzen somit die axiale Verschiebebewegung der Schaltmuffe 1'.

Vorzugsweise ist im Bereich des Einsatzes 13' ein Zahn aus der regulären Zahnreihe der Innenverzahnung der Schaltmuffe 1' ausgelassen, so dass hier ein größerer Abstand zwischen benachbarten Zähnen entsteht. In Abwandlung der Anordnung von Figur 3 könnte die Seitenfläche des Einsatzes 13' auch mit eingekerbten Vertiefungen entsprechend dem Anschlag 13 von Figur 2 ausgebildet sein, damit die Kupplungszähne 4 des Gangrades 6 nicht nur mit ihren Spitzen, sondern ganzflächig an einen Anschlag stoßen können.

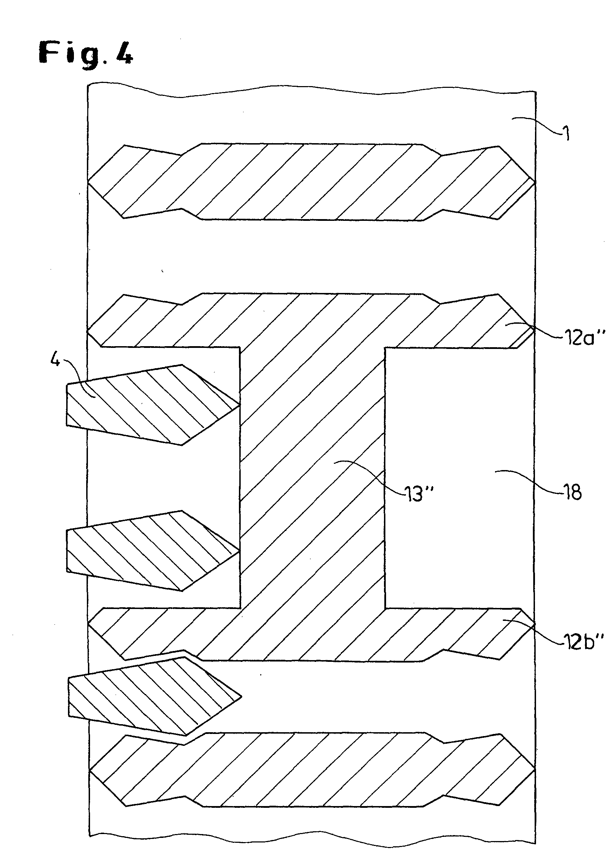

Figur 4 zeigt eine dritte Ausführungsform für einen Anschlag an einer Schaltmuffe 1' '. Hierbei wird durch eine mechanische Bearbeitung zwischen zwei benachbarten Zähnen 12a' ' und 12b' ' eine Tasche 18 ausgebildet, die in der Mitte zwischen den beiden Zähnen einen Anschlag 13'' stehen lässt. Weiterhin wird vorzugsweise ein Zahn aus der regulären Zahnreihe der Innenverzahnung der Schaltmuffe 1'' ausgelassen. Funktional entspricht diese Ausführungsform nach Figur 4 der Ausführungsform nach Figur 3, wobei lediglich die Herstellung der Schaltmuffe 1'' anders erfolgt. Während bei Figur 4 Taschen 18 ausgearbeitet werden, wird bei Figur 3 nach Herstellung der Schaltmuffe 1' mit den Nuten 17 ein Einsatz 13' zur Ausbildung des Anschlages eingesetzt.

## Patentansprüche

1. Schaltgetriebe enthaltend
a) eine Welle (9) mit einer Außenverzahnung (11),
b) eine axial verschiebebewegliche Schaltmuffe (1, 1', 1'') mit einer Innenverzahnung (12), die mit der Außenverzahnung der Welle in Eingriff steht,
c) einen auf der Welle angeordneten Synchronring (3) mit einer Sperrverzahnung (2), die bei einer axialen Verschiebung der Schaltmuffe mit deren Innenverzahnung (12) in Eingriff gebracht wird,
d) ein auf der Welle drehbar angeordnetes Gangrad (6) mit einer Kupplungsverzahnung (4), die bei einer axialen Verschiebung der Schaltmuffe über den Synchronring hinaus mit der Innenverzahnung (12) der Schaltmuffe in Eingriff gebracht wird,
**dadurch gekennzeichnet, dass** zwischen wenigstens zwei aufeinanderfolgenden Zähnen (12a, 12b, 12c; 12a', 12b'; 12a'', 12b'') der Innenverzahnung der Schaltmuffe (1) ein Anschlag (13, 14; 13'; 13'') angeordnet ist, der gegen die Kupplungsverzahnung (4) des Gangrades (6) anstößt, um die axiale Verschiebung der Schaltmuffe zu begrenzen.

2. Schaltgetriebe nach Anspruch 1, **dadurch gekennzeichnet, dass** die Sperrverzahnung (2) des Synchronringes (3) im Umfangsbereich des wenigstens einen Anschlages (13, 14; 13'; 13'') ausgespart ist.

3. Schaltgetriebe nach Anspruch 1 oder 2,
**dadurch gekennzeichnet, dass** mehrere Gruppen aufeinanderfolgender Zähne mit Anschlägen, vorzugsweise drei Gruppen zu je drei Zähnen, äquidistant über den Umfang der Schaltmuffe (1) verteilt sind.

4. Schaltgetriebe nach einem der Ansprüche 1 bis 3,
**dadurch gekennzeichnet, dass** die Sperrzähne (2) des Synchronringes (3) eine Keilform haben, und dass der Anschlag (13, 14) zwischen den Zähnen der Schaltmuffe (1) komplementär hierzu geformt ist.

5. Schaltgetriebe nach mindestens einem der Ansprüche 1 bis 4,
**dadurch gekennzeichnet, dass** innerhalb einer Gruppe aufeinanderfolgender Zähne (12a', 12b'; 12a'', 12b'') mit Anschlägen mindestens ein Zahn der regulären Zahnreihe fehlt.

6. Schaltgetriebe nach mindestens einem der Ansprüche 1 bis 5,
**dadurch gekennzeichnet, dass** der Anschlag durch ein Einsatzelement (13') gebildet wird, welches zwischen zwei benachbarten Zähnen (12a', 12b') befestigt ist.

7. Schaltgetriebe nach Anspruch 6,
**dadurch gekennzeichnet, dass** das Einsatzelement (13') in mindestens einer, vorzugsweise in zwei in der Schaltmuffe (1) umlaufenden Nuten (17) verankert ist.
